# Europäisches Patentamt
# European Patent Office
# Office européen des brevets

(19)

(11) Publication number:

**0 052 484**
**B1**

(12)

# EUROPEAN PATENT SPECIFICATION

(45) Date of publication of patent specification: **02.05.85**

(21) Application number: **81305368.3**

(22) Date of filing: **12.11.81**

(51) Int. Cl.⁴: **F 16 J 15/02,** F 16 L 23/00, C 04 B 37/00

(54) Improvements in and relating to gasket manufacture.

(30) Priority: **15.11.80 GB 8036727**
**01.12.80 GB 8038419**

(43) Date of publication of application:
**26.05.82 Bulletin 82/21**

(45) Publication of the grant of the patent:
**02.05.85 Bulletin 85/18**

(84) Designated Contracting States:
**BE DE FR GB IT NL SE**

(56) References cited:
**DE-A-2 536 939**

(73) Proprietor: **T&N Materials Research Limited**
**20 St. Mary's Parsonage**
**Manchester M3 2NL (GB)**

(72) Inventor: **Atkinson, Alan William**
**94 Elmpark Grove**
**Rochdale Lancs (GB)**
Inventor: **Lancaster, Janet Margaret**
**64 Whitegate**
**Dearnley Littleborough Lancs. (GB)**

(74) Representative: **Crux, John Anthony et al**
**20 St. Mary's Parsonage**
**Manchester M3 2NL (GB)**

Courier Press, Leamington Spa, England.

## Description

This invention relates to the manufacture of gaskets from expanded graphite. It is particularly relevant to the manufacture of flat gaskets for automotive and petrochemical applications.

Hitherto, some such gaskets have been moulded directly from elastomeric or polymeric materials. Gaskets have also been blanked out of sheet materials, for example from papers and/or sheets of fibre-reinforced jointing materials, with or without some form of metallic core. Yet other gaskets have been made by printing settable liquid compositions onto metallic or composite substrates.

In order to obtain enhanced chemical and thermal resistance, it has been proposed to use foils or sheets made from expanded graphite, but only at considerable cost because of the high labour content and cutting waste involved in building up a complete gasket by cutting or punching, followed by laminating to attain both the desired shape and thickness. Also, graphite foil is a relatively fragile material, so that handling problems are encountered.

In its broadest aspect the present invention provides a method of manufacturing an expanded graphite gasket comprising the steps of taking co-operating male and female mould members, the female mould member comprising a channel extending through a block from one face to a directly opposite face, the channel as seen in plan having a width and configuration corresponding to a desired gasket shape, filling the channel with a charge of expanded graphite particles presenting a substrate to one face of said block with said channel in register with said locations, filling the channel with a charge of expanded graphite particles, followed by pressing the charge with the male mould member onto the substrate to form a gasket thereon and thereafter removing the mould members.

The faces of the block are preferably parallel; the method preferably includes the step of pre-treating the substrate with adhesive in the location or locations where a gasket is desired.

As only relatively low pressures are needed to convert loose expanded graphite particles into compacted, fully coherent graphite foils, the female mould member can be made of inexpensive materials such as plywood or aluminium. The male member can be made of aluminium, mild steel or reinforced plastics, for example.

Expanded graphite particles are normally supplied at a bulk density of about 4 to 6 g/litre. It has been found advantageous to increase this to about 10 to 40 g/litre, by means of a preliminary treatment. Pre-treatment by subjecting the graphite to a milling operation for example, has the effect of breaking up the original vermiform particles so that they pack together more readily, exhibiting the desired increased bulk density. They also flow more readily into the corners of a mould; the increased bulk density thus enables the use of a shallower mould for a given quantity of graphite.

The method of the invention therefore preferably includes a preliminary step of pre-treating the expanded graphite particles to increase their bulk density.

The pressing edge of the male mould member can be flat to produce a flat gasket of constant thickness and density, or it may be contoured to give a gasket of correspondingly contoured density/thickness. This may be necessary to meet particular sealing requirements.

The depth of the channel must be great enough to accommodate the charge of particles of expanded graphite. The density change on compaction is of the order of from 4 to 40 to a compacted density of 700 to 1500 or more so that a fairly large volume of particles is needed to make even a relatively thin gasket. (The above figures are in gm/litre.)

The charge of particles may be a single charge, or successive charges may be used in order to build up a desired density and/or thickness profile for the gasket. Where successive charges are used, the first charge must not be fully compacted, or the second charge may not adequately adhere to it. This applies equally to the use of three or more successive charges, of course.

According to a particularly preferred feature of the invention, the pretreatment of the substrate with adhesive is only carried out where a gasket is actually needed. Untreated portions may be left where it is desired to have no gasket or to facilitate removal of a piece of the gasket. This is useful where several otherwise identical substrates are distinguished by a slightly different gasket layout comprising parts only of the same common channel disposition. One mould can be used for all the plates in a set of heat exchanger plates, for example, if the pretreatment with adhesive is correctly applied to each plate so as to enable all undesired gasket portions to be cut away after pressing.

According to another embodiment of the invention the apparatus just mentioned is used to produce a two-sided gasket by a slightly different method. Instead of using a flat sheet substrate applied to one face of the block, a "skeleton" substrate is prepared as a sliding fit in the channel. The substrate is, in plan view the same shape as the desired gasket. The block is placed on a flat support and the half of the total charge of powder is put into the channel. The substrate is then put on top of the half charge of powder and the rest of the charge is put into the channel on top of the substrate. A single pressing operation is then used to form a graphite gasket in situ on both sides of the substrate. The advantage of this method lies in the fact that no finishing operations are needed. The product is a two-sided, self-supporting graphite gasket with a central reinforcing core and there is practically no waste. This is particularly true for relatively complex shapes which could not previously be made without substantial cutting waste.

The same method can be used with a single charge of particles to form a graphite gasket on only one side of the substrate.

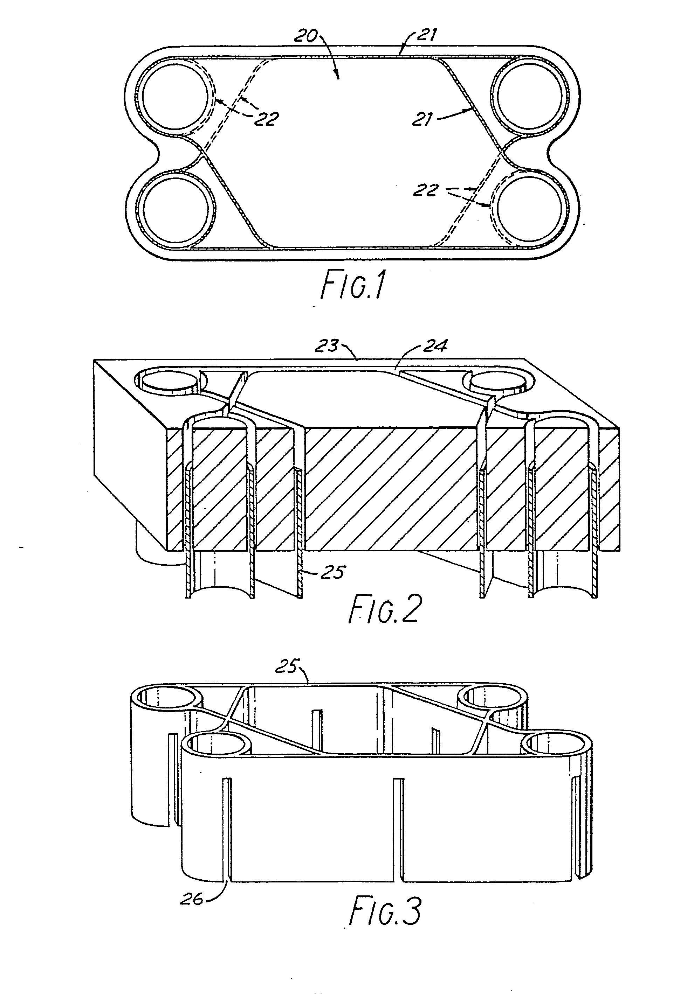

In order that the invention be better understood, embodiments of it will now be briefly described with reference to Figures 1, 2, 3, 4 and 5. These figures are, respectively, a plan view of a corrugated heat exchanger plate, a perspective view, partly in section, of co-operating male and female mould members, a perspective view of the male mould member of Figure 2, a schematic cross-sectional side view of parts of the tooling prior to pressing a gasket in accordance with the invention and a schematic cross-sectional side view of parts of the tooling prior to pressing a gasket by the slightly different method referred to above.

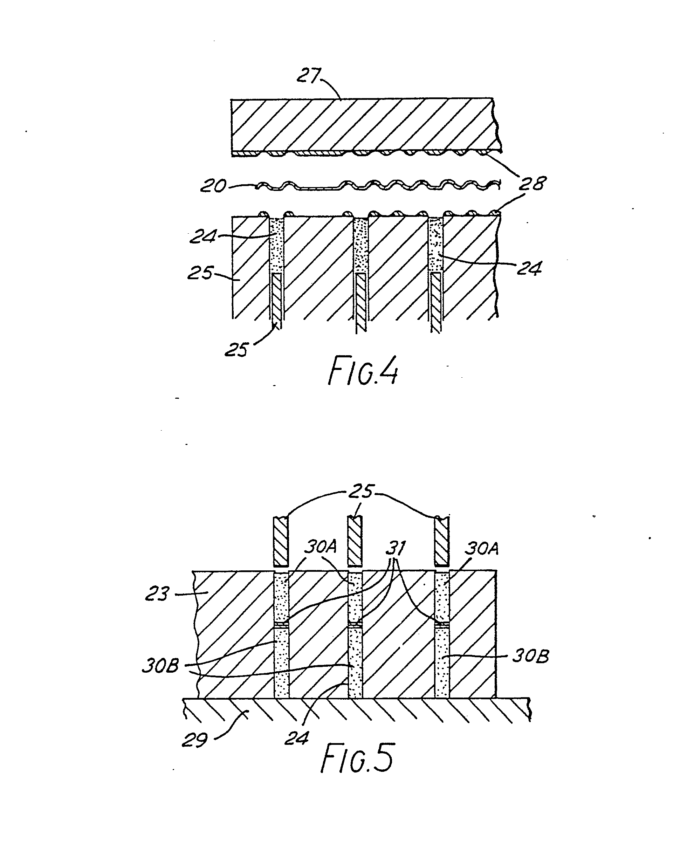

Figure 1 shows a plate 20 having an expanded graphite gasket 21 on one face. The gasket portions 22 shown by dashed lines were removed after pressing, as will be described later. Figure 2 shows a solid block female mould member 23, having a slot (or channel) 24 corresponding in plan to the gasket outline of Figure 1 machined through it. The otherwise detached island portions are located by dowel pins (not shown), around which a male mould member 25 (see also Figure 3) with slots 26 slides. Referring to Figure 4, parts of the block mould member 23, the male mould member 25 and the plate 20 are shown, the spacing between the plate and the block being greatly increased, for purposes of illustration. Also shown in Figure 4 is a back-up tool 27 which has a profiled surface 28 moulded from thermoset resin to match the profile of the plate 20. The back up tool is used to reinforce/support the plate during the pressing of a gasket. Although not shown in Figure 2, the upper, plate-contacting surface of the block 23 has a moulded thermoset profile (28 in Figure 4) on it; this is also to support/reinforce the plate during pressing, because it is important to avoid plate distortion or damage. In the case of a completely flat plate of course, such moulded profiles would not be needed.

The slot (or channel) 24 is shown filled with loose expanded graphite particles.

In operation, the plate is pretreated with adhesive in those areas where a gasket is required. In Figure 1, these areas are where the gasket 21 is located; the areas 22 bounded by dashed lines would be left untreated. After clamping the block mould, the plate and the back up tool together, the slot or channel is filled with a charge of expanded graphite particles and the male mould member is used to press the particles into a gasket of the desired thickness and density. The plate is thereafter removed and the gasket formed in situ on it is trimmed, by removal of the unwanted portions in the areas 22.

To illustrate the utility of the invention in this context, a heat exchanger plate required a graphite seal 65 mm wide by 50 mm thick. Using manual methods to make it, by successive cutting and lamination, from 7 to 9 individual graphite foil layers were needed. This was wasteful, because of the large amount of off-cuts produced. It was extremely time-consuming. By contrast the method of the invention made the desired gasket directly from about 90 gm of loose expanded graphite particles, with minimal waste.

Figure 5 shows the block mould member 23 supported by a flat, rigid back-up tool 29. The charge of graphite in the slot or channel 24 is in two portions, 30A and 30B respectively, on opposite sides of a "skeleton" substrate 31, which is in the shape of the desired gasket (in plan view) and is also a sliding fit in the slot or channel. (Because of the flat rigid back-up tool 29 it is not of course necessary to locate the detached island portions by dowel pins; they could be mounted to the tool 29). Pressing is carried out as before but in this case the gasket is formed on opposite sides of the substrate 31, which is preferably adhesive-treated prior to insertion in the slot or channel 24.

## Claims

1. A method of making a flat gasket (21) directly from expanded graphite particles, the method comprising the steps of forming co-operating male and female mould members, the female mould member (23) being in the form of a channel (24) extending through a block from one face to a directly opposite face, the channel as seen in plan having a width and configuration corresponding to a desired gasket shape, filling the channel (24) with a charge of expanded graphite particles, clamping a substrate (20) to one face of the block with said channel (24) in register with the gasket locations, followed by pressing the charge with the male mould member (25) onto the substrate (20) to form a gasket (21) thereon and thereafter removing the mould members (23, 25).

2. A method of making a flat gasket (21) directly from expanded graphite particles, the method comprising the steps of forming co-operating male and female mould members, the female mould member (23) being in the form of a channel (24) extending through a block from one face to a directly opposite face, the channel (24) as seen in plan having a width and configuration corresponding to a desired gasket shape, placing a flat, rigid back-up tool in contact with one of said faces, placing a gasket substrate into said channel (24) introducing a charge of particles into the channel, followed by applying the male mould member (25) to press the charge and the substrate against the back-up tool to form a graphite gasket in situ on one side of the substrate.

3. A method according to claim 2 including the step of introducing a charge of graphite particles (30B) into said channel (24) prior to placing the substrate (31) therein and introducing a second charge of particles (30A), followed by pressing both charges and the substrate against the back-up tool (29) to form a graphite gasket in situ on both sides of the substrate.

4. The method of claim 3 including the preliminary step of forming the substrate in the shape of the desired gasket (in plan view), as a sliding fit for said channel (24).

5. The method of any preceding claim including the step of pre-treating the substrate with adhesive in all those locations where it is desired to form a gasket in situ thereon.

6. The method of any preceding claim including the further step of removing from the substrate any unwanted gasket portions (22) thereon.

7. The method of any preceding claim including a further step of pre-treating the expanded graphite particles to increase their bulk density.

8. The method of claim 7 wherein the particles are milled to increase their bulk density from about 4 to 6 g/litre to about 10 to 40 g/litre.

**Patentansprüche**

1. Verfahren zum Herstellen einer flachen Dichtung (21) direkt aus expandierten Graphitpartikeln, gekennzeichnet durch die Schritte:

Herstellen von zusammenwirkenden Formteilen in Form einer Patrize und Matrize, wobei das Matrizenformteil (23) in Form eines Kanals (24) ausgebildet ist, der sich durch einen Block von einer Seite zu einer direkt gegenüberliegenden Seite erstreckt und der in Draufsicht gesehen eine Breite und eine Gestalt entsprechend der gewünschten Form der Dichtung aufweist,

Ausfüllen des Kanals (24) mit einer Füllung expandierter Graphitpartikel,

Anklemmen eines Substrats (20) auf einer Seite des mit dem Kanal (24) versehenen Blockes registerhaltig mit den Stellen der Dichtung;

nachfolgendes Pressen der Füllung mit dem Patrizenformteil (25) auf das Substrat (20), um eine Dichtung (21) darauf auszubilden und

danach Entfernen der Formteile (23, 25).

2. Verfahren zur Herstellung einer Flachdichtung (21) direkt aus expandierten Graphitpartikeln, gekennzeichnet durch die Schritte:

Ausbildung zusammenwirkender patrizen- und matrizenförmiger Formteile, wobei das Matrizenformteil (23) in Form eines Kanals (24) ausgebildet ist, der sich durch einen Block von einer Seite zu einer direkt gegenüberliegenden Seite erstreckt, und wobei der Kanal (24) in Draufsicht gesehen eine Breite und Gestalt entsprechend der Form einer gewünschten Dichtung aufweist, Anordnen eines flachen, steifen Stützwerkzeugs in Berührung mit einer der Seiten,

Anordnen eines Dichtungssubstrates in dem Kanal (24), Einbringen einer Füllung von Partikeln in den Kanal, danach Anlegen des Patrizenformteiles (25), um die Füllung und das Substrat gegen das Stützwerkzeug zu pressen, um eine Graphitdichtung in situ auf einer Seite des Substrates auszubilden.

3. Verfahren nach Anspruch 2, gekennzeichnet durch die Schritte:

Einbringen einer Füllung von Graphitpartikeln (30B) in den Kanal (24) vor Anordnen des Substrats (31) in dem Kanal und

Einbringen einer zweiten Füllung von Partikeln (30A), danach Pressen beider Füllungen und des Substrats gegen das Stützwerkzeug (29), um eine Graphitdichtung in situ auf beiden Seiten des Substrates auszubilden.

4. Verfahren nach Anspruch 3, dadurch gekennzeichnet, daß vorher das Substrat in der gewünschten Dichtungsform (in Draufsicht gesehen) in Gleitsitz für den Kanal (24) ausgebildet wird.

5. Verfahren nach einem der vorhergehenden Ansprüche, dadurch gekennzeichnet, daß das Substrat an all den Stellen mit einem Kleber vorbehandelt wird, an welchen eine Dichtung in situ auf dem Substrat ausgebildet werden soll.

6. Verfahren nach einem der vorhergehenden Ansprüche, gekennzeichnet durch den weiteren Schritt, daß von dem Substrat irgendwelche ungewünschten Dichtungsabschnitte (22) entfernt werden.

7. Verfahren nach einem der vorhergehenden Ansprüche, gekennzeichnet durch den weiteren Schritt, daß die expandierten Graphitpartikel vorbehandelt werden, um ihre Schüttdichte zu erhöhen.

8. Verfahren nach Anspruch 7, dadurch gekennzeichnet, daß die Partikel gemahlen werden, um ihre Schüttdichte von etwa 4 bis 6 g/l auf etwa 10 bis 40 g/l erhöhen.

**Revendications**

1. Procédé de réalisation d'un joint d'étanchéité plat (21) directement à partir de particules de graphite expansé, caractérisé en ce qu'il comprend les opérations de façonnage d'éléments de moule mâle et femelle coopérants, l'élément de moule femelle (23) étant en forme de canal (24) s'étendant à travers un bloc depuis une face jusqu'à une face directement opposée, le canal vu en plan ayant une largeur et une configuration correspondant à une forme de joint désirée, remplissage du canal (24) avec une charge de particules de graphite expansé, serrage d'un substrat (10) sur une face du bloc avec mise dudit canal (24) en registre avec les emplacements de joint, puis pressage de la charge par l'élément de moule mâle (25) sur le substrat (20) pour former sur celui-ci un joint d'étanchéité (21) en ensuite enlèvement des éléments de moule (23, 25).

2. Procédé de réalisation d'un joint d'étanchéité plat (21) directement à partir de particules de graphite expansé, caractérisé en ce qu'il comprend les opérations de façonnage d'éléments de moule mâle et femelle coopérants, l'élément de moule femelle (23) étant sous la forme d'une gouttière (24) s'étendant à travers un bloc d'une face à une face directement opposée, la gouttière (24) vue en plan ayant une largeur et une configuration correspondant à une forme de joint d'étanchéité désirée, de mise en place d'un outil de soutien plat et rigide contre une desdites faces, de mise en place d'un substrat de joint d'étanchéité dans ledit canal (24), d'introduction d'une charge de particules dans le canal, suivant de l'application de l'élément de moule mâle (25) pour presser la charge et le substrat contre l'outil de soutien pour former in situ un joint d'étanchéité en graphite sur une face du substrat.

3. Procédé selon la revendication 2 caractérisé en ce qu'il comporte l'opération d'introduction d'une charge de particules de graphite (30B) dans ledit canal (24) avant la mise en place du substrat (31) dans celui-ci et l'introduction d'une seconde charge de particules (30A), suivie par le pressage des deux charges et du substrat contre l'outil de soutien (29) pour former in situ un joint d'étanchéité en graphite sur les deux faces du substrat.

4. Procédé selon la revendication 3 caractérisé en ce qu'il comporte l'opération préliminaire de façonnage du substrat sous la forme du joint d'étanchéité désiré (vu en plan), ayant un ajustage glissant dans ledit canal (24).

5. Procédé selon l'une quelconque des revendications précédentes caractérisé en ce qu'il comporte l'opération de prétraitement du substrat à l'adhésif dans tous les endroits où l'on désire former in situ un joint d'étanchéité sur lui.

6. Procédé selon l'une quelconque des revendications précédentes caractérisé en ce qu'il comporte l'opération supplémentaire consistant à retirer du substrat toutes parties du joint d'étanchéité non désirées (22) qui y sont présentes.

7. Procédé selon l'une quelconque des revendications précédentes caractérisé en ce qu'il comporte une opération supplémentaire de prétraitement des particules de graphite expansé pour augmenter leur densité apparente.

8. Procédé selon la revendication 7 caractérisé en ce que l'on broie les particules pour porter leur densité apparente d'environ 4 à 6 g/l à environ 10 à 40 g/l.

*FIG.1*

*FIG.2*

*FIG.3*

FIG.4

FIG.5